Europäisches Patentamt

European Patent Office

Office européen des brevets

(19)

(11) **EP 1 075 761 B1**

(12) **EUROPEAN PATENT SPECIFICATION**

(45) Date of publication and mention
of the grant of the patent:
**05.02.2003 Bulletin 2003/06**

(51) Int Cl.⁷: **H04N 5/59**, H04N 9/72

(21) Application number: **98920814.5**

(86) International application number:
**PCT/SG98/00031**

(22) Date of filing: **30.04.1998**

(87) International publication number:
**WO 99/057892 (11.11.1999 Gazette 1999/45)**

(54) **AUTOMATIC BRIGHTNESS LIMITATION FOR AVOIDING VIDEO SIGNAL CLIPPING**

AUTOMATISCHE HELLIGKEITSBEGRENZUNG ZUM VERMEIDEN VON
VIDEOSIGNALABSCHNEIDEN

LIMITATION AUTOMATIQUE DE LA LUMINOSITE AFIN D'EVITER UN ECRETAGE DU SIGNAL
VIDEO

(84) Designated Contracting States:
**DE FR GB IT**

(43) Date of publication of application:
**14.02.2001 Bulletin 2001/07**

(73) Proprietor: **STMicroelectronics Asia Pacific Pte
Ltd.
Singapore 569508 (SG)**

(72) Inventors:
• **YEE, Chee Weng
Singapore 150071 (SG)**
• **GE, Wei Guo, STS Microelectronics
Trade Zone, Shenzhen (CN)**

• **DESPREZ-LE GOARANT, Yann
Industrial Park 2, Singapore 569508 (SG)**

(74) Representative: **Cerbaro, Elena, Dr. et al
STUDIO TORTA S.r.l.,
Via Viotti, 9
10121 Torino (IT)**

(56) References cited:
**EP-A- 0 499 354        EP-A- 0 542 347
US-A- 4 642 690**

• **PATENT ABSTRACTS OF JAPAN vol. 11, no. 127
(E-501) & JP 61 273075 A (NEC CORP), 3
December 1986**

**Description**

**Field of the Invention**

This invention relates to a method and apparatus for avoiding signal-clipping in a video signal by automatically controlling brightness limitations.

**Background Art**

Television circuits are commonly designed or modified so as to further integrate the functions thereof to enable operate with low power consumption. However, discrepancies can arise when the power supply is reduced. For example, a clipping effect may occur when the signals reach a minimum or maximum voltage level. The signal may deteriorate in shape in these circumstances.
As far as waveform is concerned, the television circuit required to maintain a signal with desired dynamic amplitude, even if the power supply is reduced. Therefore, preventive measures may be required with the implementation of a brightness limitation block to avoid the black reference voltage level and the video signals from reaching undesirable levels. Furthermore, the black reference voltage level should be controlled in a constant manner.

**Summary of the Invention**

In accordance with the present invention, there is provided a video signal processing system comprising, for each colour channel, a control circuit and clamping circuit for generating a colour channel reference signal and controlling a colour channel video signal, and a brightness limitation circuit coupled to receive the colour channel reference signal from each of the colour channels and coupled to provide a feedback signal to regulate a brightness level of each video signal according to a comparison of a minimum signal level amongst the colour channel reference signals and a fixed reference signal level.
Preferably the brightness limitation circuit comprises a minimum detection circuit for detecting and outputting a minimum signal level from amongst the colour channel reference signals, and a comparator having as inputs the fixed reference signal level and the minimum signal level, so as to produce the feedback signal as output. In a particular embodiment of the invention, the comparator is coupled to receive the minimum signal level at its negative input and the fixed reference signal level at its positive input.
Preferably each control circuit includes a plurality of adders coupled in the signal path of the corresponding colour channel reference signal, wherein the feedback signal is coupled as input to one of the adders. The feedback signal may be coupled from the brightness limitation circuit to the control circuit by way of a brightness control circuit which enables manual brightness adjustment of the colour channels.
In one form of the invention each control circuit includes an adder circuit coupled in the signal path of the corresponding colour channel video signal, wherein a feedback signal from the clamping circuit, generated according to the colour channel video signal and the colour channel reference signal, is coupled as input to the adder circuit.
The present invention also provides a video signal processing circuit for regulating colour channel video information signals, comprising a minimum signal detector for detecting a minimum signal level amongst a plurality of colour channel reference signals, a comparator which compares the minimum signal level with a fixed voltage reference signal and-generates a corresponding output, and an additive feedback coupling of the comparator output signal and each of the colour channel reference signals. The corresponding method is set out in claim 12.
The present invention further provides a video signal brightness-controller, comprising:

a plurality of colour channel control means each coupled to receive as input a respective colour channel video signal and colour channel reference signal and generate a respective adjusted colour channel video signal and adjusted colour-channel reference signal;
a plurality of clamping means, each clamping means corresponding to a respective colour channel control means and being coupled to receive as input the respective adjusted colour channel video signal and adjusted colour channel reference signal and produce a corresponding clamping feedback signal;
a brightness limitation means coupled to receive the adjusted colour channel reference signal from each colour channel control means and produce a corresponding brightness feedback signal;

wherein each of the colour channel control means includes a first adder in path of the colour channel video signal, to which the clamping feedback signal is coupled, and a second adder in the path of the colour channel reference signal, to which the brightness feedback signal is coupled; and
wherein said brightness limitation means comprises a minimum signal level detector for detecting a minimum signal level amongst the plurality of adjusted colour channel reference signals, and a comparator for generating said brightness feedback signal on the basis of the detected minimum signal level and a fixed reference signal level.

Brief Description of the Drawings

The invention is described in greater detail hereinafter, by way of example only, with reference to a preferred embodiment thereof and the accompanying drawings, wherein:

Figure 1 is a functional block diagram illustrating a known television signal control system;
Figure 2 is an illustration of a brightness curve;
Figures 3 and 4 illustrate of video signals from a known system;
Figure 5 is a circuit diagram of an output portion of a control block;
Figure 6 is a functional block diagram of a television signal control system incorporating a brightness limitation block according to an embodiment of the present invention;
Figure 7 is a block diagram of a brightness limitation circuit;
Figure 8 is a simplified functional block diagram of a video signal control system according to an embodiment of the present invention; and
Figure 9 shows several voltage range diagrams illustrating the operation of an embodiment of the invention.

Detailed Description of the Preferred Embodiments

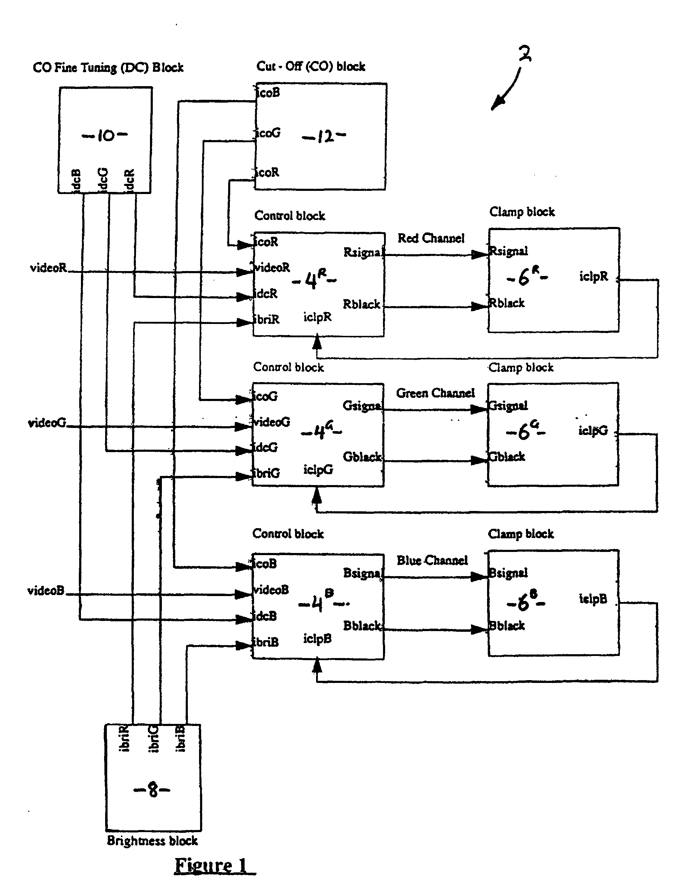

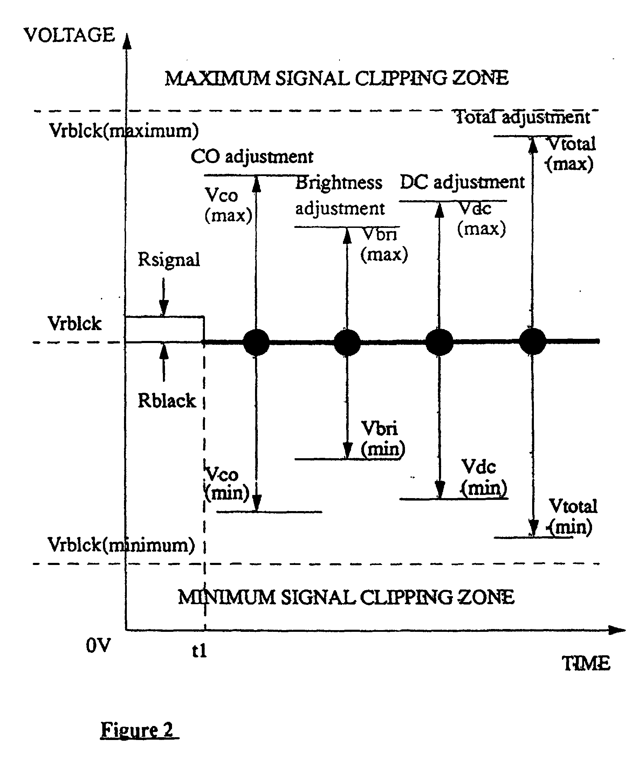

Figure 1 shows a fundamental functional block diagram of an existing system 2 for controlling the signals of red, green and blue channels before these signals are distributed to the display tube of a television. Basically, this system includes, for each of the red, green and blue channels, a control block ($4^R, 4^G, 4^B$) and a clamp block ($6^R, 6^G, 6^B$), a brightness block 8, a cut-off(CO) fine tuning (DC) block 10 and a cut-off(CO) block 12. Since the control and clamp blocks are identical for each channel, only the red channel is discussed hereinbelow in the interests of clarity.
The control block 4 is mainly constructed using adders to control the video signals to present perfect pictures for display on the television screen. The appropriate CO brightness DC and damping input signals are mixed together to generate accurate output signals, Rsignal, Gsignal, Bsignal, Rblack, Gblack and Bblack. The generated output Rsignal is an output signal that contains video information, while Rblack is an output signal that provides a black reference voltage level. The control block, however, is sensitive to the signals with low voltage, as discussed in greater detail hereinbelow.
The clamp block 6 receives Rsignal and Rblack as input signals from the control block 4. The clamp block is used to clamp the Rsignal signal, which means that Rsignal is aligned with the Rblack signal, as illustrated in Figure 2, to maintain a stable black level or picture brightness. The output signal from the clamp block 6, iclpR is fed back to the control block 4 to determine the amplitude difference between the Rsignal and Rblack signals for performing further alignment if necessary.
The brightness block 8 is used to adjust the black reference voltage level Rblack. Brightness can be adjusted by the user with the use of remote-control or from the television set itself. The GO fine tuning (DC) block 10 is used to fine tune the black reference voltage level which is controlled by the internal circuit as described below. The signals'for brightness adjustment consists of ibriR, ibriG and ibriB, and the signals for DC adjustment comprise idcR, idcG and idcB, and are passed to the respective control blocks (Figure 1).
The cut off block 12 is used to control the red, green and blue electron guns so as to provide an accurate black reference voltage level. This is required because signals for the electron guns have a high spread. Manual cut off adjustment is usually performed at the manufacturing stage. Tuning has to be done if the quality of one colour is different from a defined colour. This adjustment is made with the use of a potentiometer or by bus control whereby information is stored in a memory circuit of the television. On the other hand, automatic cut off adjustment can be done with a feedback loop configuration. Both methods allow correction signals of icoR, icoG and icoB to be varied from Vco(min) to Vco(max) as shown in Figure 2.
With reference to Figure 2, Rblack is an output signal that provides a black reference voltage level which is used for clamping purpose so that a constant black level can be maintained. Rsignal is an output signal which contains the red channel video information. A maximum signal clipping zone and minimum signal clipping zone are indicated in the figure and are referred to as forbidden zones, whereby both Rsignal and Rblack signals are prohibited from falling into these zones. However, the Rsignal signal can be fine tuned and adjusted with three adjustments. Namely, cut-off (CO) adjustment, brightness adjustment and CO fine tuning (DC) adjustment. Taking Vrblck as the black reference voltage level, the Rblack signal is able to swing from Vco(min) to Vco(max) when CO adjustment is being tuned. Similarly the Rblack signal is able to swing from Vbri(min) to Vbri(max) when brightness adjustment is being tuned. Likewise, the Rblack signal is able swing from Vdc(min) to Vdc(max) when DC adjustment is being tuned. During initialization, at time tl, when the television set is turned on, the Rsignal signal has to be aligned along the Rblack signal progressively. Alternately, alignment has to be made when any of the three adjustments has been fine tuned or adjusted. As a result, the signal of Rsignal also has a constant black level as it is in line with the Rblack signal.

Total adjustment is the addition of CO adjustment, brightness adjustment and DC adjustment. An equation of for the overall adjustment Vtotal is as shown below:

$$\text{Total adjustment} = \text{CO adjustment} + \text{brightness adjustment} + \text{DC adjustment} \qquad \text{(Equ. 1)}$$

$$\text{Vtotal} = \text{Vco} + \text{Vbri} + \text{Vdc} \qquad \text{(Equ. 2)}$$

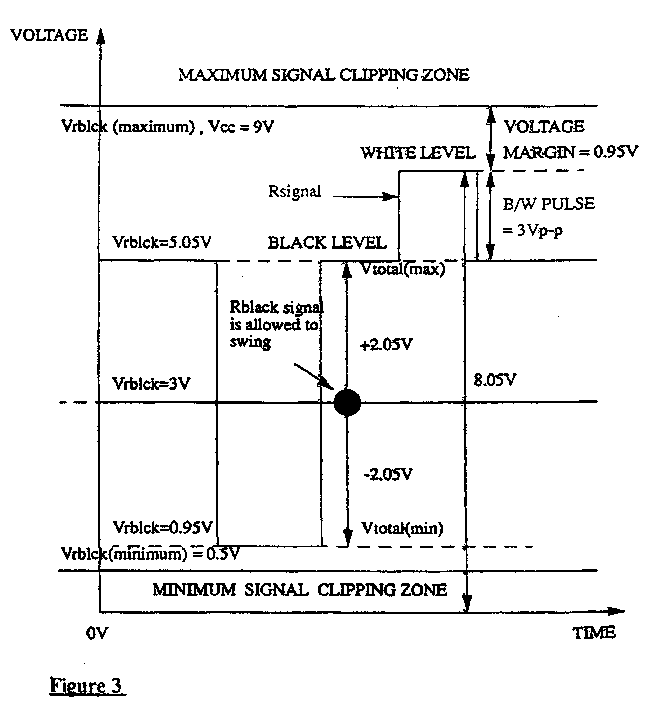

Figure 3 illustrates a video signal obtained from an.existing system that operates with a 9 Volt power supply. Various voltages for the system as shown in Table 1, below, are based on assumption only.

Table 1

| Names of Waveform | Voltage (Volt) |
|---|---|
| Black to White (B/W) Pulse | 3 Vp-p |
| Vrblck (typical) | 3 volts |
| Vco (Maximum/Minimum) | +/- 1 Volt |
| Vbri (Maximum/Minimum) | +/- 0.9 Volt |
| Vdc (Maximum/Minimum) | +/- 0.15 Volt |

To compute the voltages of Vtotal(max) and Vtotal(min)

$$\text{Vtotal} = \text{Vco} + \text{Vbri} + \text{Vdc} \qquad \text{from (Equ. 2)}$$

$$\text{Vtotal(max)} = (1 + 0.9 + 0.15) \text{ Volts}$$

$$= \underline{+2.05 \text{ Volts}}$$

$$\text{Vtotal} = \text{Vco} + \text{Vbri} + \text{Vdc} \qquad \text{from (Equ. 2)}$$

$$\text{Vtotal(min)} = (-1 -0.9 -0.15)\text{Volts}$$

$$= \underline{-2.05 \text{ Volts}}$$

Typically, Rblack signal is set at the black reference voltage level (Vrblck) which is 3 Volts. Based on the calculation as shown above, this signal is allowed to swing positive by 2.05 Volts and negative by 2.05 Volts. In other words, it is able to vary from 0.95 Volt to 5.05 Volts. A further 3 Volts is required by the black to white (B/W) pulse with the contrast level set to maximum. Hence, the maximum level of the video signal is 8.05 Volts. A voltage margin of 0.95 Volts is reserved for sharpness adjustment and over modulation to occur. As such neither of the Rsignal and Rblack signals falls into the maximum and minimum signal limitation zones.

Thus, no problem is encountered with typical video amplitude.

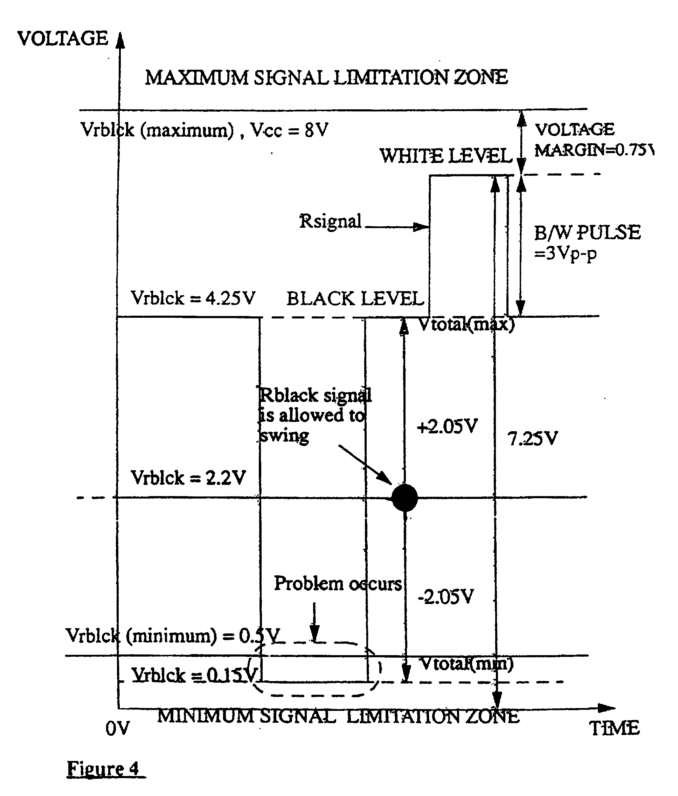

Figure 4 illustrates a video signal obtained from an existing system that operates with an 8 Volt power supply. The objective of power supply reduction is to achieve a system that is able to function with low power consumption. At the same time, it must be able to maintain a video signal with reasonable dynamic amplitude. However, difficulties have been encountered in these circumstances.

The black reference voltage level (Vrblck) is compensated to 2.2 Volts as the power supply is reduced by 1 Volt. Similarly, Vrblck is allowed to swing positive by 2.05 Volts and negative by 2.05 Volts. Likewise, 3 Volts is required by the black to white pulse with the contrast level set to maximum. Hence, the maximum level of the video signal is 7.25 Volts.

To compute the range of Vrblck level, consider the following:

Let     Vrblck be the final result of the black reference voltage level, and
        Vrblck(current) be the present black reference voltage level.

$$Vrblck = Vrblck(current) + Vtotal \qquad\qquad (Equ. 3)$$

Therefore,

$$Vrblck(maximum) = (2.2 + 2.05)\ Volts$$

$$= 4.25\ Volts$$

and

$$Vrblck(minimum) = (2.2 - 2.05)\ Volt$$

$$= \underline{0.15\ Volt}$$

Based on the calculated results, the Rblack signal is only allowed to vary from 0.15 Volts to 4.25 Volts in this instance. A voltage margin of 0.75 Volt is reserved for further B/W pulse adjustment as mentioned before. This implies that the maximum signal clipping zone is not affected, however the minimum signal clipping zone is affected by the Rblack signal.

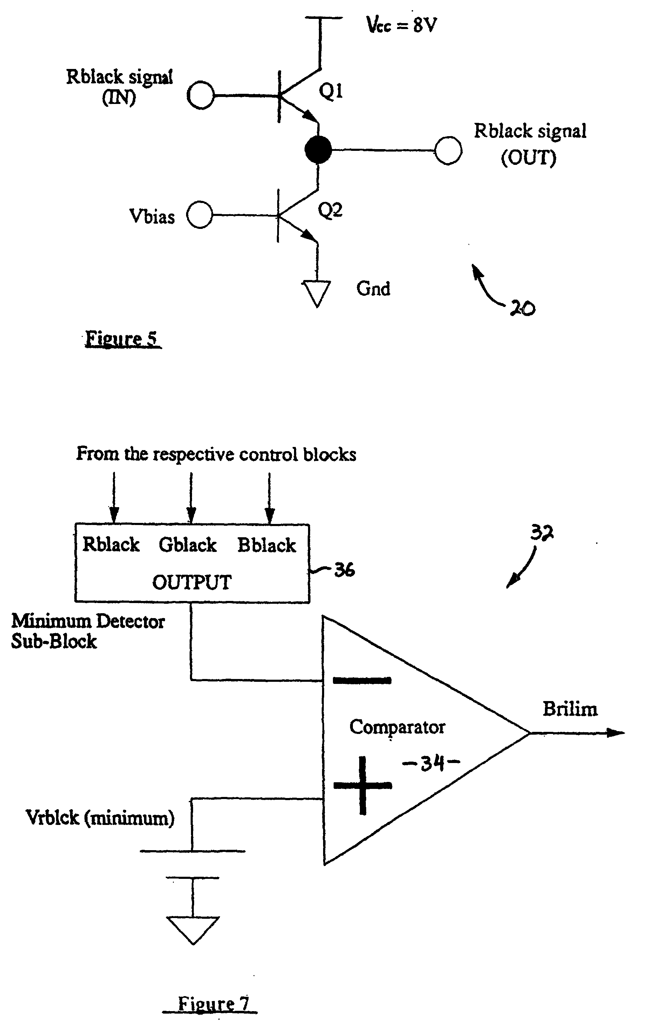

Figure 5 shows a circuit 20 of an output portion of a control block. Basically, it consists of an emitter follower Q1 coupled to a transistor Q2 which is biased at a fixed voltage, Vbias. Assume that, the Rblack signal (OUT) is allowed to fall to a voltage level of Vrblck(minimum) which is as low as 0.5 Volt. Based on the calculation as shown above, it shows that Rblack signal (OUT) has reached to a voltage level of 0.15 Volt. This implies that the Rblack signal has already fallen into the minimum signal limitation zone. Hence, the voltage level (Vrblck) of Rblack signal is too low for Q2 to function properly. As such, it causes Q2 to operate in saturation.

In order to alleviate this problem, the television circuit can be equipped with a brightness limitation block, which can provide the following:

1. Prevention of the black reference voltage level (Rblack) and the video signal (Rsignal) from entering into the minimum signal clipping zone.
2. Provision of the brightness block with a precise correction signal, limiting the brightness.
3. Maintenance of a constant black reference voltage level at Vrblck minimum.
4. Maintenance of a video signal with dynamic amplitude.

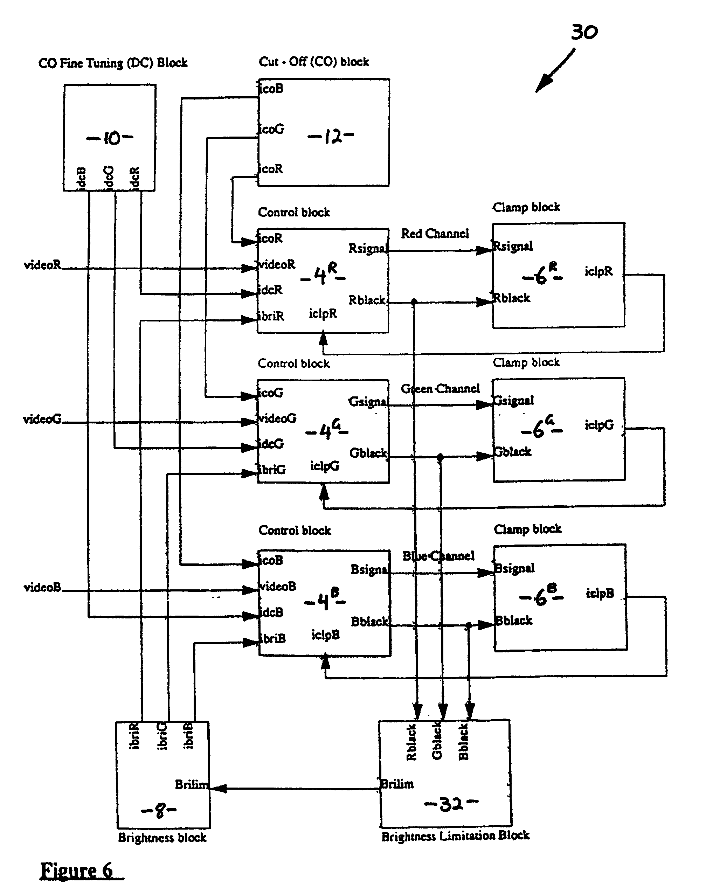

In order to overcome the above mentioned difficulties, a brightness limitation block 32 can be implemented in the system 30 as shown in Figure 6. Signals of Rblack, Gblack, and Bblack from the respective control blocks 4$^R$, 4$^G$, 4$^B$ are connected to the inputs of the brightness limitation block 32. The output of the brightness limitation block, Brilim is fed back to the brightness block 8. With this configuration, it contributes the difference between the existing system and the proposed system.

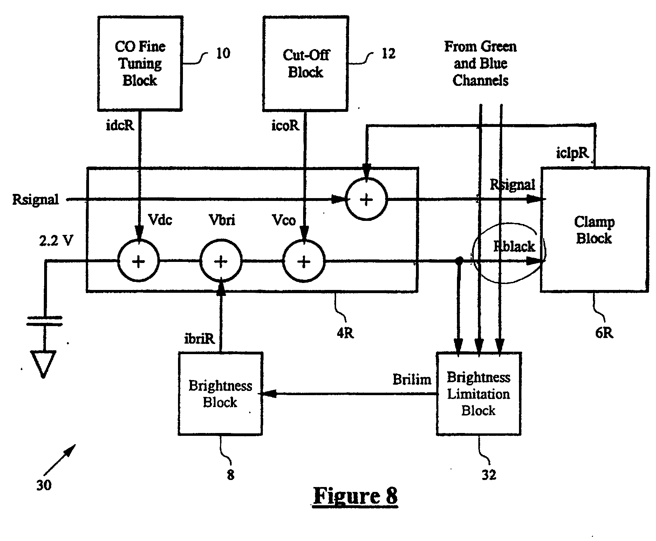

With reference to Figure 7, a simple exemplary implementation of the brightness limitation block 32 is shown, including a comparator 34. A minimum detector 36 is introduced before the input of the comparator, which can be easily done using diodes. The output of the minimum detector is applied to the negative input of the comparator while the positive input of the comparator is maintained with a fixed voltage, Vrbick (minimum) with respect to ground.

The function of the minimum detector 36 is to select only one of the three input signals with the lowest voltage. Subsequently, this signal is reflected on the output of the minimum detector.

A comparison is made between the voltage at the negative input and the positive input of the comparator 34. If the voltage at the negative input is less than Vrblck(minimum) at the positive input ofthe comparator, a signal will be generated at the output, Brilim. The signal at Brilim will correspond to the amplitude between Vrblck(minimum) and the signal at the negative input of the comparator. This correction signal is fedback to the input of the brightness block 8. As such, the signal of Rblack is prohibited from entering the minimum signal clipping zone.

On the other hand, if the voltage at the negative input is greater than the Vrblck(minimum) at the positive input of the comparator, no signal is generated at the output, Brilim. Therefore, it is not necessary to add to the signal being passed to the brightness block as it did not enter beyond the minimum signal clipping zone.

Figure 8 shows a simplified block diagram of the circuit 30 shown in Figure 6 (for the red channel only), to further elaborate the detailed operation of the new system. Basically, the control block 4 comprises four adders: three adders are included along the Rblack signal path and one adder is included along the Rsignal path. The brightness block 8 is used to provide brightness adjustment, the CO fine tuning block 10 is used to provide DC adjustment, and the Cut-Off block 12 is used to provide CO adjustment.

As described above, if the Rblack signal from the control block 4 is less than Vrblck(minimum), a correction signal, Brilim, will be generated and fedback to the brightness block. In the brightness block the correction signal, Brilim, may be combined with a manual brightness adjustment signal, using an adder or the like, to form the ibriR signal provided to the control block. Subsequently, this signal is added to the Rblack signal so as to avoid it from falling into the minimum signal limitation zone.

Alignment is performed with the use of the clamp block 6. A comparison is made between the Rblack and Rsignal signals. An iclpR signal is then generated at the output of the clamp block which indicates the amplitude difference of both signals if they are different. Eventually, iclpR signal is added into the Rsignal signal. As such, the Rsignal signal is superimposed on the Rblack signal and alignment has been done.

Example calculations are set forth below to illustrate how the Rblack signal is prevented from entering the minimum signal limitation zone with the implementation of the brightness limitation block as described above.

Example 1

Assume that Vrblck(current) = 2.2 volts,
Vco(minimum) = -1 Volt,
Vdc(minimum) = -0.15 Volt,

and the brightness limitation block is intended to prevent Vrblck from falling below 0.5 Volt. It is possible then to determine what is the Vbri(minimum) that is required to be added into the control block.

$$Vrblck = Vrblck(current) - Vco - Vdc - Vbri \qquad \text{from (Equ. 3)}$$

$$0.5 = 2.2 - 1 - 0.15 - Vbri$$

Thus,     Vbri = <u>-0.55 Volt,</u>     ideally Vbri(minimum) = -0.9 Volt

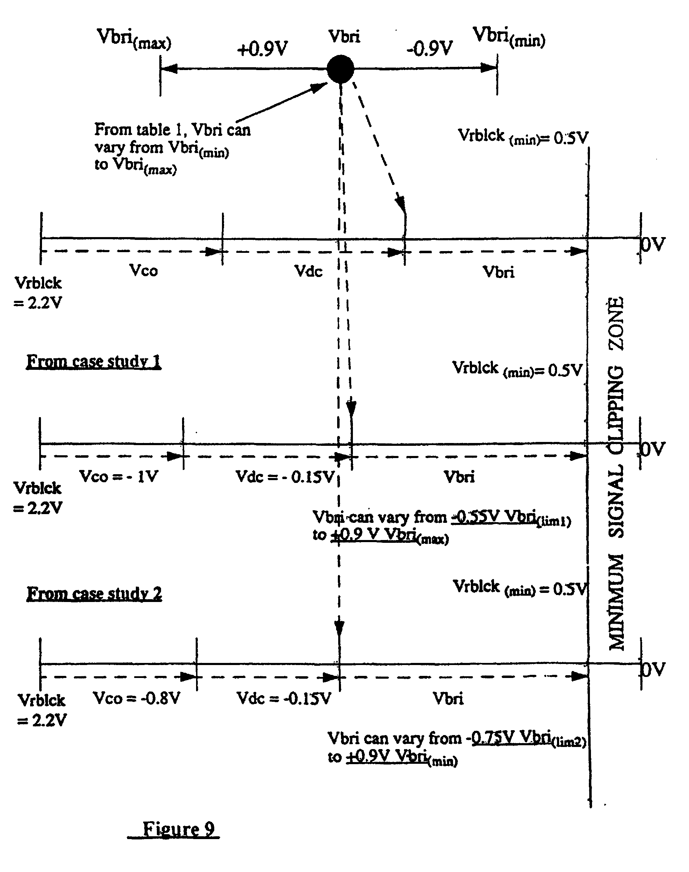

Therefore, Vbri from the brightness block would be greater than -0.55 Volt, otherwise, it will cause Vrblck to fall into the minimum signal limitation zone. This indicates that there is a significant increase of voltage, Vbri from -0.9 Volt to -0.55 volt, to provide the correction (refer Figure 9).

Example 2

Assume that Vrblck(current) = 2.2 Volts,
Vco = -0.8 Volt, and
Vdc (minimum) = -0.15 Volt.

It is possible then to determine the minimum Vbri.

$$Vrblck = Vrblck(current) - Vco - Vdc - Vbri \qquad \text{from (Equ. 3)}$$

$$0.5 = 2.2 - 0.8 \ 0.15 - Vbri$$

Hence,     Vbri = <u>-0,75 Volt,</u>     ideally minimum Vbri = -0.9 Volt

Therefore, Vbri from the brightness block should not be greater than -0.75 Volt. This indicates that there is a significant increase of voltage Vbri, from -0.9 Volt to -0.75 Volt, to provide the correction (Refer figure 9).

Based on simulation results of this system, it has been shown that the black reference voltage level and the video signal are prevented from entering into the minimum signal clipping zone. Moreover, a constant black reference voltage level and the video signal with dynamic amplitude are maintained.

The foregoing detailed description of the preferred implementations of the present invention has been presented by way of example only, and is not intended to be considered limiting to the invention as defined in the appended claims.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integers or steps.

**Claims**

1. A video signal processing system comprising, for each colour channel, a control circuit ($4^R$, $4^G$, $4^B$) and clamping circuit ($6^R$, $6^G$, $6^B$) for generating a colour channel reference signal (Rblack,Gblack,Bblack) and controlling a colour channel video signal (iclpR, icplG, icplB), **characterized by** a brighmess limitation circuit (32) coupled to receive the colour channel reference signal from each of the colour channels and coupled to provide a feedback signal (Brilim) to regulate a brightness level of each video signal according to a comparison (34) of a minimum signal level amongst the colour channel reference signals and a fixed reference signal level (Vrblck).

2. A video signal processing system as claimed in claim 1 wherein the brightness limitation circuit (32) comprises a minimum detection circuit (36) for detecting and outputting a minimum signal level from amongst the colour channel reference signals, and a comparator (34) having as inputs said fixed reference signal level (Vrblck) and said minimum signal level, and producing said feedback signal (Brilim) as output.

3. A video signal processing system as claimed in claim 2, wherein said comparator (34) is coupled to receive said minimum signal level at its negative input and said fixed reference signal level (Brilim) at its positive input.

4. A video signal processing system as claimed in claim 2 or 3, wherein each said control circuit ($4^R$, $4^G$, $4^B$) includes a plurality of adders coupled in the signal path of the corresponding colour channel reference signal, and wherein said feedback signal is coupled as input to one of said adders.

5. A video signal processing system as claimed in claim 4, wherein said feedback signal is coupled from the brightness limitation circuit (32) to the control circuit ($4^R$, $4^G$, $4^B$), by way of a brightness control circuit (8) which enables manual brightness adjustment of the colour channels.

6. A video signal processing system as claimed in claim 5, wherein said brightness control circuit (8) incorporates an adder for combining the feedback signal (Brilim) with a manual brightness adjustment signal.

7. A video signal processing system as claimed in claim 4, further including at least one cut-off adjustment circuit (12) coupled to provide input to a respective adder in the signal path of the colour channel reference signal in each control circuit ($4^R$, $4^B$, $4^G$).

8. A video signal processing system as claimed in any one of claims 1 to 7, wherein each said control circuit ($4^R$, $4^B$, $4^G$) includes an adder circuit coupled in the signal path of the corresponding colour channel video signal, and wherein a feedback signal from said clamping circuit ($6^R$, $6^B$, $6^G$), generated according to the colour channel video signal and the colour channel reference signal, is coupled as input to the adder circuit.

9. A video signal processing circuit for regulating colour channel video information signals, **characterized by** a minimum signal detector (36) for detecting a minimum signal level amongst a plurality of colour channel reference signals (Rblack, Bblack, Gblack) a comparator (34) which compares said minimum signal level with a fixed voltage reference signal (Vrblck) and generates a corresponding output (Brilim), and an additive feedback coupling of said comparator output signal and each of said colour channel reference signals.

10. A video signal processing circuit as claimed in claim 9, including a brightness control circuit (8) for adjusting the video signal brightness level by manual adjustment of said colour channel reference signals, wherein said additive feedback coupling of said comparator output signal (Brilim) is coupled through said brightness control circuit.

11. A video signal brightness controller, comprising:

a plurality of colour channel control means ($4^R$, $4^B$, $4^G$) each coupled to receive as input a respective colour channel video signal (videoR, videoB, videoG) and colour channel reference signal and generate a respective adjusted colour channel video signal (Rsignal, Bsignal, Gsignal) and adjusted colour channel reference signal (Rblack, Bblack, Gblack);

a plurality of clamping means ($6^R$, $6^B$, $6^G$), each clamping means corresponding to a respective colour channel control means and being coupled to receive as input the respective adjusted colour channel video signal and adjusted colour channel reference signal and produce a corresponding clamping feedback signal (iclpR, iclpB, iclpG);

**characterized by**:

a brightness limitation means (32) coupled to receive the adjusted colour channel reference signal from each colour channel control means and produce a corresponding brightness feedback signal (Brilim);

wherein each said colour channel control means includes a first adder in path of the colour channel video signal, to which said clamping feedback signal is coupled, and a second adder in the path of the colour channel reference signal, to which said brightness feedback signal is coupled; and
wherein said brightness limitation means comprises a minimum signal level detector (36) for detecting a minimum signal level amongst the plurality of adjusted colour channel reference signals, and a comparator (34) for generating said brightness feedback signal on the basis of the detected minimum signal level and a fixed reference signal level (Vrblck).

12. A method for regulating colour channel video information signals, **characterized by** the steps of detecting a minimum signal level amongst a plurality of colour channel reference signals (Rblack, Gblack, Bblack), comparing said minimum signal level with a fixed voltage reference signal (Vrblck) and generating a corresponding comparator output (Brilim), and providing an additive feedback coupling of said comparator output signal and each of said colour channel reference signals.

**Patentansprüche**

1. Ein Videosignalverarbeitungssystem, das für jeden Farbkanal Folgendes aufweist: eine Steuerschaltung ($4^R$, $4^G$, $4^B$) und eine Klemmschaltung ($6^R$, $6^G$, $6^B$) zum Erzeugen eines Farbkanalreferenzsignals (Rblack, Gblack, Bblack) und zum Steuern eines Farbkanalvideosignals (iclpR, iclpG, iclpB), **gekennzeichnet durch** eine Helligkeitsbegrenzungsschaltung (32) gekoppelt für den Empfang des Farbkanalreferenzsignals von jedem der Farbkanäle und gekoppelt für das Vorsehen eines Rückkoppelsignals (Brilim) zum Regulieren eines Helligkeitspegels eines jeden Videosignals gemäß einem Vergleich (34) eines minimalen Signalpegels unter den Farbkanalreferenzsignalen und eines festen Referenzsignalpegels (Vrblck).

2. Ein Videosignalverarbeitungssystem nach Anspruch 1, wobei die Helligkeitsbegrenzungsschaltung (32) eine Minimumdetektionsschaltung (36) aufweist für das Detektieren und Ausgeben eines minimalen Signalpegels unter den Farbkanalreferenzsignalen, und einen Vergleicher (34) mit dem festen Referenzsignalpegel (Vrblck) und dem minimalen Signalpegel als Eingänge und das Rückkoppelsignal (Brilim) als Ausgang erzeugend.

3. Videosignalverarbeitungssystem nach Anspruch 2, wobei der Vergleicher (34) für das Empfangen des minimalen Signalpegels an seinem negativen Eingang und des festen Referenzsignalpegels (Brilim) als seinem positiven Eingang gekoppelt ist.

4. Videosignalverarbeitungssystem nach Anspruch 2 oder 3, wobei jede der Steuerschaltungen ($4^R$, $4^G$, $4^B$) eine Vielzahl von Addierern aufweist, die in den Signalweg des entsprechenden Farbkanalreferenzsignals gekoppelt sind, und wobei das Rückkoppelsignal als Eingang zu einem der Addierer gekoppelt ist.

5. Videosignalverarbeitungssystem nach Anspruch 4, wobei das Rückkoppelsignal aus der Helligkeitsbegrenzungsschaltung (32) zur Steuerschaltung ($4^R$, $4^G$, $4^B$) gekoppelt ist mittels einer Helligkeitssteuerschaltung (8), die eine manuelle Helligkeitseinstellung der Farbkanäle ermöglicht.

6. Videosignalverarbeitungssystem nach Anspruch 5, wobei die Helligkeitssteuerschaltung (8) einen Addierer umfasst für das Kombinieren des Rückkoppelsignals (Brilim) mit einem manuellen Helligkeitseinstellsignal.

7. Videosignalverarbeitungssystem nach Anspruch 4, das weiter zumindest eine Abschneideeinstellschaltung (12) aufweist, die zum Vorsehen eines Eingangs für einen jeweiligen Addierer im Signalweg des Farbkanalreferenzsignals in jeder Steuerschaltung ($4^R$, $4^B$, $4^G$) gekoppelt ist.

8. Videosignalverarbeitungssystem nach einem der Ansprüche 1 bis 7, wobei jede Steuerschaltung ($4^R$, $4^B$, $4^G$) eine Addiererschaltung aufweist, die in den Signalweg des entsprechenden Farbkanalvideosignals gekoppelt ist, und wobei ein Rückkoppelsignal aus der Klemmschaltung ($6^R$, $6^B$, $6^G$), das gemäß dem Farbkanalvideosignal und dem Farbkanalreferenzsignal erzeugt wurde, als Eingang in die Addiererschaltung gekoppelt ist.

9. Videosignalverarbeitungsschaltung zur Regulierung von Farbkanalvideoinformationssignalen, **gekennzeichnet durch** einen Minimumsignaldetektor (36) für das Detektieren eines minimalen Signalpegels und einer Vielzahl von Farbkanalreferenzsignalen (Rblack, Bblack, Gblack), einen Vergleicher (34), der den minimalen Signalpegel mit einem festen Spannungsreferenzsignal (Vrblck) vergleicht und einen entsprechenden Ausgang (Brilim) erzeugt, und eine additive Rückkoppelkopplung des Vergleicherausgabesignals und eines jeden der Farbkanalreferenzsignale.

10. Videosignalverarbeitungsschaltung nach Anspruch 9, die eine Helligkeitssteuerschaltung (8) aufweist für das Einstellen des Videosignalhelligkeitspegels durch eine manuelle Einstellung der Farbkanalreferenzsignale, wobei die additive Rückkoppelkopplung des Vergleicherausgangssignals (Brilim) durch die Helligkeitssteuerschaltung gekoppelt ist.

11. Eine Videosignalhelligkeitssteuerung, die Folgendes aufweist:

    eine Vielzahl von Farbkanalsteuermitteln ($4^R$, $4^B$, $4^G$), von denen ein jedes für das Empfangen eines jeweiligen Farbkanalvideosignals (videoR, videoB, videoG) und eines Farbkanalreferenzsignals und für das Erzeugen eines jeweiligen eingestellten Farbkanalvideosignals (Rsignal, Bsignal, Gsignal) und eines eingestellten Farbkanalreferenzsignals (Rblack, Bblack, Gblack) gekoppelt ist;
    eine Vielzahl von Klemmmitteln ($6^R$, $6^B$, $6^G$), wobei jedes Klemmmittel einem jeweiligen Farbkanalsteuermittel entspricht und für das Empfangen des jeweiligen eingestellten Farbkanalvideosignals und des eingestellten Farbkanalreferenzsignals und für das Erzeugen eines entsprechenden Klemmrückkoppelsignals (iclpR, iclpB, iclpG) gekoppelt ist;

    **gekennzeichnet durch**:

    ein Helligkeitsbegrenzungsmittel (32), das für das Empfangen des eingestellten Farbkanalreferenzsignals aus einem jeden der Farbkanalsteuermittel und für das Erzeugen eines entsprechenden Helligkeitsrückkoppelsignals (Brilim) gekoppelt ist;

    wobei jedes der Farbkanalsteuermittel einen ersten Addierer im Weg des Farbkanalvideosignals aufweist, mit welchem das Klemmrückkoppelsignal gekoppelt ist, und einen zweiten Addierer im Weg des Farbkanalreferenzsignals, mit welchem das Helligkeitsrückkoppelsignal gekoppelt ist; und
    wobei die Helligkeitsbegrenzungsmittel einen Minimumsignalpegeldetektor (36) aufweisen für das Detektieren eines minimalen Signalpegels unter der Vielzahl von eingestellten Farbkanalreferenzsignalen und einem Vergleicher (34) für das Erzeugen des Helligkeitsrückkoppelsignals auf der Basis des selektierten minimalen Signalpegels und eines festen Referenzsignalpegels (Vrblck).

12. Ein Verfahren für das Regulieren von Farbkanalvideoinformationssignalen, **gekennzeichnet durch** die Schritte des Detektierens eines minimalen Signalpegels und einer Vielzahl von Farbkanalreferenzsignalen (Rblack, Gblack, Bblack), des Vergleichens des minimalen Signalpegels mit einem festen Spannungsreferenzsignal (Vrblck) und des Erzeugens eines entsprechenden Vergleicherausgangs (Brilim), und des Vorsehens einer additiven Rückkoppelkopplung des Vergleicherausgangssignals und eines jeden der Farbkanalreferenzsignale.

**Revendications**

1. Système de traitement de signal vidéo comportant, pour chaque canal de couleur, un circuit de commande (4R, 4G, 4B) et un circuit d'écrêtage (6R, 6G, 6B) afin de générer un signal de référence de canal de couleur (Rblack, Gblack, Bblack) et commander un signal vidéo de canal de couleur (iclpR, icplG, icplB), **caractérisé par** un circuit de limitation de luminosité (32) relié afin de recevoir le signal de référence de canal de couleur provenant de chacun des canaux de couleur et relié afin de délivrer un signal de rétroaction (Brilim) de façon à réguler un niveau de luminosité de chaque signal vidéo en fonction d'une comparaison (34) d'un niveau de signal minimum parmi les signaux de référence de canal de couleur et un niveau de signal de référence fixe (Vrblck).

2. Système de traitement de signal vidéo selon la revendication 1, dans lequel le circuit de limitation de luminosité (32) comporte un circuit de détection de minimum (36) afin de détecter et délivrer un niveau de signal minimum parmi les signaux de référence de canal de couleur, et un comparateur (34) ayant comme entrées ledit niveau de signal de référence fixe (Vrblck) et ledit niveau de signal minimum, et produisant ledit signal de rétroaction (Brilim) comme sortie.

3. Système de traitement de signal vidéo selon la revendication 2, dans lequel ledit comparateur (34) est relié afin de recevoir ledit niveau de signal minimum au niveau de son entrée négative et ledit niveau de signal de référence fixe (Brilim) au niveau de son entrée positive.

4. Système de traitement de signal vidéo selon la revendication 2 ou 3, dans lequel chaque dit circuit de commande (4R, 4G, 4B) comprend une multiplicité d'additionneurs reliés dans le passage de signal du signal de référence de canal de couleur correspondant, et dans lequel ledit signal de rétroaction est relié en tant qu'entrée à l'un desdits additionneurs.

5. Système de traitement de signal vidéo selon la revendication 4, dans lequel ledit signal de rétroaction est relié depuis le circuit de limitation de luminosité (32) au circuit de commande (4R, 4G, 4B), au moyen d'un circuit de commande de luminosité (8) qui permet un ajustement manuel de luminosité des canaux de couleur.

6. Système de traitement de signal vidéo selon la revendication 5, dans lequel ledit circuit de commande de luminosité (8) incorpore un additionneur afin de combiner le signal de rétroaction (Brilim) avec un signal d'ajustement manuel de luminosité.

7. Système de traitement de signal vidéo selon la revendication 4, comprenant en outre au moins un circuit d'ajustement de coupure (12) relié afin de fournir une entrée à un additionneur respectif dans le passage de signal du signal de référence de canal de couleur dans chaque circuit de commande (4R, 4B, 4G).

8. Système de traitement de signal vidéo selon l'une quelconque des revendications 1 à 7, dans lequel chaque dit circuit de commande (4R, 4B, 4G) comprend un circuit additionneur relié dans le passage de signal au signal vidéo de canal de couleur correspondant, et dans lequel un signal de rétroaction provenant dudit circuit d'écrêtage (6R, 6G, 6B), généré en fonction du signal vidéo de canal de couleur et du signal de référence de canal de couleur, est relié en tant qu'entrée au circuit additionneur.

9. Circuit de traitement de signal vidéo destiné à réguler des signaux d'information vidéo de canal de couleur, **caractérisé par** : un circuit de détection de minimum (36) afin de détecter un niveau de signal minimum parmi une multiplicité de signaux de référence de canal de couleur (Rblack, Gblack, Bblack), un comparateur (34) qui compare ledit niveau de signal minimum et un signal de référence de tension fixe (Vrblck) et génère une sortie correspondante (Brilim), et une liaison de rétroaction additive dudit signal de sortie de comparateur et de chacun desdits signaux de référence de canal de couleur.

10. Circuit de traitement de signal vidéo selon la revendication 9, comprenant un circuit de commande de luminosité (8) afin d'ajuster le niveau de luminosité de signal vidéo par ajustement manuel desdits signaux de référence de canal de couleur, ladite liaison de rétroaction additive dudit signal de sortie de comparateur (Brilim) étant reliée par l'intermédiaire dudit circuit de commande de luminosité.

11. Circuit de commande de luminosité de signal vidéo, comportant :

une multiplicité de moyens de commande de canal de couleur (4R, 4G, 4B), reliés chacun afin de recevoir en tant qu'entrée un signal vidéo de canal de couleur respectif (videoR, videoB, videoG) et un signal de référence de canal de couleur et générer un signal vidéo de canal de couleur ajusté respectif (Rsignal, Bsignal, Gsignal) et un signal de référence de canal de couleur ajusté (Rblack, Bblack, Gblack);
une multiplicité de moyens d'écrêtage (6R, 6B, 6G), chacun des moyens d'écrêtage correspondant à un des moyens de commande de canal de couleur respectif et étant relié afin de recevoir en tant qu'entrée le signal vidéo de canal de couleur ajusté respectif et le signal de référence de canal de couleur ajusté et produire un signal de rétroaction d'écrêtage correspondant (iclpR, iclpB, iclpG);

**caractérisé par** des moyens de limitation de luminosité (32) reliés afin de recevoir un signal de référence de canal de couleur ajusté depuis chacun des moyens de commande de canal de couleur et produire un signal de rétroaction de luminosité correspondant (Brilim);

chacun desdits moyens de commande de canal de couleur comprenant un premier additionneur dans le passage du signal vidéo de canal de couleur, auquel est relié ledit signal de rétroaction d'écrêtage, et un deuxième additionneur dans le passage du signal de référence de canal de couleur, auquel est relié ledit signal de rétroaction de luminosité; et

lesdits moyens de limitation de luminosité comprenant un détecteur de niveau de signal minimum (36) destiné à détecter un niveau de signal minimum parmi la multiplicité de signaux de référence de canal de couleur ajustés, et un comparateur (34) destiné à générer ledit signal de rétroaction de luminosité sur la base du niveau de signal minimum détecté et d'un niveau de signal de référence fixe (Vrblck).

12. Procédé de régulation de signaux d'information vidéo de canal de couleur, **caractérisé par** les étapes consistant à détecter un niveau de signal minimum parmi une multiplicité de signaux de référence de canal de couleur (Rblack, Gblack, Vblack), comparer ledit niveau de signal minimum et un signal de référence de tension fixe (Vrblck), et générer une sortie de comparateur correspondante (Brilim), et prévoir une liaison de rétroaction additive dudit signal de sortie de comparateur et de chacun desdits signaux de référence de canal de couleur.

EP 1 075 761 B1

Figure 1

**Figure 2**

Figure 3

Figure 4

Rblack signal
(IN)

Vcc = 8V

Q1

Rblack signal
(OUT)

Vbias

Q2

Gnd

20

Figure 5

From the respective control blocks

| Rblack | Gblack | Bblack |
|--------|--------|--------|
| OUTPUT |        |        |

36

32

Minimum Detector
Sub-Block

Comparator

−34−

Brilim

Vrblck (minimum)

Figure 7

30

CO Fine Tuning (DC) Block

Cut - Off (CO) block

-10-

idcB idcG idcR

icoB

icoG    -12-

icoR

Control block

Clamp block

Red Channel

icoR

videoR    Rsignal    Rsignal

idcR    -4R-    -6R-    iclpR

ibriR    iclpR    Rblack    Rblack

Control block

Clamp block

Green Channel

icoG

videoG    Gsignal    Gsignal

idcG    -4G-    -6G-    iclpG

ibriG    iclpG    Gblack    Gblack

Control block

Clamp block

Blue Channel

icoB

videoB    Bsignal    Bsignal

idcB    -4B-    -6B-    iclpB

ibriB    iclpB    Bblack    Bblack

ibriR ibriG ibriB    Rblack Gblack Bblack

Brilim    Brilim

-8-    -32-

Brightness block    Brightness Limitation Block

**Figure 6**

17

**Figure 8**

**Figure 9**